# EUROPÄISCHE PATENTANMELDUNG

(11) **EP 2 469 223 A1**
(43) Veröffentlichungstag der Anmeldung: **27.06.2012**
(21) Anmeldenummer: 10016095.1
(22) Anmeldetag: 27.12.2010
(51) Int. Cl.: G01B 11/16, F03D 11/00

(54) **Einrichtung und Verfahren zur Messung der Verformung eines Rotorblatts bei Belastung**

(71) Anmelder: Baumer Innotec AG, 8500 Frauenfeld (CH)
(72) Erfinder: Kluser, Christoph, 9500 Wil (CH); Tiedeke, Joachim, 8280 Kreuzlingen (CH); Weigel, Michael, 88142 Wasserburg (DE)
(74) Vertreter: Strauss, Steffen

(57) **Zusammenfassung**

Die Erfindung betrifft eine Einrichtung zur Verformung eines Rotorblatts bei Belastung, bei welcher die Verdrehung einer Sender-/Empfängereinheit über einen an der Seite des Rotorblatts angeordneten Messpunkt gemessen wird und der ansonsten durch die Verdrehung vorhandene Messfehler kompensiert wird.

## Beschreibung

### Gebiet der Erfindung

Die Erfindung bezieht sich auf eine Einrichtung sowie auf ein Verfahren zur Messung der Verformung eines Rotorblatts bei Belastung, insbesondere des Rotorblatts einer Windkraftanlage.

### Hintergrund der Erfindung

Rotorblätter, insbesondere Rotorblätter von Windkraftanlagen unterliegen hohen Belastungen. Diese werden in der Regel aus faserverstärkten Kunststoffen hergestellt und erfahren bei hohen Windgeschwindigkeiten einen hohen Durchbiegungsgrad. Hierdurch kann die Struktur des Rotorblatts geschädigt werden. Weiter kann es schlimmstenfalls dazu kommen, dass das gebogene Rotorblatt gegen einen Mast der Anlage stößt oder dass es sogar bricht.

Es ist daher bekannt, die Verformung, insbesondere die Biegung, eines Rotorblatts zu überwachen, um bei zu hoher Belastung durch Verstellung des Anstellwinkels des Rotorblatts die Belastung verringern zu können. Bei hohen Windgeschwindigkeiten muss die Anlage ganz abgeschaltet werden.

Eine derartige Einrichtung zur Messung der Verformung eines Rotorblatts zeigt beispielsweise die deutsche Patentschrift DE 10 2006 002 708 B4.

Dabei ist in der Nähe der Nabe des Rotorblatts eine Sender-/Empfängereinheit, bestehend aus einer Lichtquelle, vorzugsweise einer LED oder einer Laserdiode und einem ortsauflösenden, bildgebenden Sensor (beispielsweise CCD, CMOS) zusammen mit einem abbildenden System, angebracht.

Beabstandet von der Sender-/Empfängereinheit befindet sich ein Retroreflektor, insbesondere ein Tripel-Spiegel, Tripelprisma, oder ein Array von Tripelspiegeln bzw. Tripelprismen, oder anderen retroreflektierenden Bauelementen, über den bzw. die das vom Sender ausgestrahlte Licht auf den ortsauflösenden Sensor reflektiert wird. Anhand der Position des Lichtpunktes auf dem ortsauflösenden Sensor kann die Verformung des Rotorblatts bestimmt werden.

Der Ort der Abbildung auf dem ortsauflösenden Sensor ist dabei proportional zu den Winkeln der Reflektoren zur optischen Achse des abbildenden Systems.

Mit einem solchen System kann auf relativ einfache Weise die Durchbiegung des Rotorblatts bestimmt werden.

Es hat sich allerdings gezeigt, dass, auch wenn die Sender-/Empfängereinheit nahe an der Nabe des Rotors angeordnet ist, sich der Bereich, in dem sich die Sender-/Empfängereinheit befindet, ebenfalls verformt.

Typischerweise ist die Sender-/Empfängereinheit an einem Schott (der sog. Plattform) des Rotorblatts angeordnet, welches sich zwischen dem Flansch und dem eigentlichen Rotorblatt erstreckt. Ein derartiges Schott soll verhindern, dass größere Mengen von Wasser oder herumfliegende Teile in die Nabe des Rotors gelangen und so mechanische Schäden verursachen. In dem Bereich zwischen Nabe und Schott ist das Rotorblatt üblicherweise im Wesentlichen zylindrisch ausgebildet, besitzt also keine Blattstruktur, welche von der Luft angeströmt wird und so zur Rotation des Windrads beiträgt. Der Bereich zwischen Nabe und Schott ist daher in der Regel relativ steif.

Dennoch kann es bei, insbesondere am Schott angeordneten Sender-/Empfängereinheiten, zu einer leichten Verdrehung der Sender-/Empfängereinheit relativ zur Hauptachse des Rotorblatts kommen, derart, dass die Messung auf den Reflektor nicht mehr proportional zur Durchbiegung des Rotorblatts ist. Bei Verwendung eines Retroreflektors reicht der vom Sender ausgehende Messbereich zwar in der Regel aus, um dennoch eine Messung vornehmen zu können.

Aufgrund der Winkelabweichung der Sender-/Empfängereinheit kommt es allerdings zu einem Messfehler, der die Genauigkeit der Messung verringert.

Im Detail kommt dieser Messfehler in der Regel dadurch zustande, dass es zu einer elliptischen Verformung des im Flanschbereich in der Regel kreiszylinderförmig, also im Querschnitt rund ausgebildeten Teil des Rotorblatts, kommt. Diese Verformung führt auch zu einer Verformung des Schotts, wodurch eine daran befestigte Sender-/Empfängereinheit die Ausrichtung ändert. Da das vorstehend beschriebene Messprinzip darauf beruht, eine Winkeländerung zu messen, wirkt sich die Verformung in Form eines Winkelfehlers unmittelbar als Messfehler aus.

### Aufgabe der Erfindung

Der Erfindung liegt demgegenüber die Aufgabe zugrunde, die genannten Nachteile des vorstehend beschriebenen Standes der Technik zumindest zu reduzieren.

Es ist insbesondere eine Aufgabe der Erfindung, den aufgrund einer Verdrehung einer Sender- und/oder Empfängereinheit auftretenden Messfehler zu kompensieren.

### Zusammenfassung der Erfindung

Die Aufgabe der Erfindung wird bereits durch eine Einrichtung zur Messung der Verformung eines Rotorblatts bei Belastung sowie durch ein Verfahren zur Messung der Verformung eines Rotorblatts nach einem der unabhängigen Ansprüche gelöst.

Bevorzugte Ausführungsform und Weiterbildungen der Erfindung sind den jeweiligen Unteransprüchen zu entnehmen,

Die Erfindung betrifft eine Einrichtung zur Messung der Verformung eines Rotorblatts bei Belastung, insbesondere des Rotorblatts einer Windkraftanlage.

Die Einrichtung umfasst zumindest einen am Rotorblatt angeordneten Sensor und zumindest einen Empfänger. Empfänger und Sensor können, wie es bei einer bevorzugten Ausführungsform der Erfindung vorgesehen ist, auch in einer Baugruppe integriert sein.

Sender und Empfänger sind vorzugsweise als bildgebendes System ausgebildet. Es ist aber denkbar, auch auf andere Messverfahren zurückzugreifen.

Von dem Sender und Empfänger beabstandet kann am Rotorblatt ein Reflektor angebracht, welcher das vom Sender ausgestrahlte Signal, insbesondere das Licht einer Leuchtdiode, zurückwirft.

Bei einer alternativen Ausführungsform der Erfindung ist statt einer Sender/Empfängereinheit und einem Reflektor der Sender beabstandet vom Empfänger am Rotorblatt angeordnet. Statt über beispielweise einen Spiegel zurück reflektiert zu werden, ist so das Lichtsignal direkt auf den Empfänger gerichtet. Diese Ausführungsform der Erfindung ist zwar in der Regel etwas aufwändiger, kann bei Störeinflüssen durch Verschmutzung, Beschlag etc. aber zuverlässiger sein.

Diese alternative Ausführungsform ist auch mit der vorstehend beschriebenen Verwendung eines Reflektors kombinierbar, so kann der Reflektor beispielsweise eine zusätzliche Lichtquelle umfassen.

Gemäß der Erfindung weist die Einrichtung Mittel zur Messung einer Positionsänderung, insbesondere einer Verdrehung, zumindest des Empfängers zu einer Bezugsachse auf. Durch die Bestimmung des Winkelfehlers vom Sender und/oder Empfänger bei einer Positionsänderung derselben kann der Fehler bestimmt werden und in die Berechnung der Verformung, insbesondere Durchbiegung des Rotorblatts eingehen und so kompensiert werden.

Unter einer Positionsänderung wird jegliche Änderung der Position des Senders und/oder Empfängers relativ zu einer beliebigen Bezugsachse des Rotorblatts verstanden. Die Positionsänderung kann dabei in sämtlichen Freiheitsgraden erfolgen, also sowohl in den drei translatorischen als auch in den drei rotatorischen Freiheitsgraden. Besonders relevant ist insbesondere eine Verdrehung des Senders und/oder Empfängers, also eine Positionsänderung in zumindest einem rotatorischen Freiheitsgrad. Unter einer Verdrehung wird also eine Winkelabweichung des Senders und/oder Empfängers gegenüber der Position im unbelasteten Zustand bzw. gegenüber einer Bezugsachse des Rotorblatts verstanden. Unter einer Bezugsachse wird jede Achse verstanden, die als Referenzachse eines Koordinatensystems dienen kann, über das die Verformung des Rotorblatts berechnet werden kann.

Die Einrichtung ist des Weiteren derart ausgebildet, dass die Messung der Positionsänderung quer, insbesondere senkrecht, zur Haupterstreckungsrichtung des Rotorblatts erfolgt.

Hierzu ist insbesondere vorgesehen, dass eine Referenzmarke an der Seite des Rotorblatts angeordnet ist, gegenüber der eine Positionsänderung gemessen wird. Diese Referenzmarke hat einen wesentlich geringeren Abstand zum Sender oder Empfänger als die in der Regel in Richtung Flügelspitze liegende Messmarke zur Messung der Verformung. So bildet die an der Seite angeordnete Messmarke einen besonders geeigneten Referenzpunkt, bei dem die Gefahr einer Positionsänderung gegenüber der Position im unbelasteten Zustand gering ausfällt.

Bei einer bevorzugten Ausführungsform der Erfindung erfolgt die Messung in Bezug auf einen Referenzpunkt auf einer an der Nabe des Rotorblatts befestigten Seitenwand. Da die Seitenwand an der Nabe befestigt ist, kommt es nicht zu dem unerwünschten Effekt, dass sich die Seitenwand selbst bei Belastung des Rotorblattes mit verbiegt. So bildet die Seitenwand eine besonders geeignete Fläche, um den Referenzpunkt hieran anzubringen.

Es versteht sich, dass unter einem Referenzpunkt im Sinne der Erfindung nicht ein Punkt im mathematischen Sinne verstanden wird, also ein Punkt ohne messbare Ausdehnung.

Vielmehr kann es sich bei dem Referenzpunkt beispielsweise um einen Sender in Form einer Lichtquelle handeln, wie beispielsweise eine Leuchtdiode. Gemäß einer weiteren Ausführungsform der Erfindung wird der Referenzpunkt durch einen Reflektor gebildet, welcher das Licht des Senders in Richtung Empfänger reflektiert.

Insbesondere können so Sender und Empfänger, wie es bei einer Ausführungsform der Erfindung vorgesehen ist, in einem Gehäuse integriert sein.

Die Messung erfolgt vorzugsweise optisch mittels eines Flächensensors, wobei die Verformung des Rotorblatts beispielsweise durch die Positionsänderung eines Lichtpunktes auf dem Flächensensor gemessen wird. Über dieses optische Messprinzip kann sowohl die Positionsänderung des Messpunktes zur Messung der Verformung des Rotorblatts als auch die Positionsänderung eines Messpunktes zur Messung der Positionsänderung des Senders und/oder Empfängers gemessen werden.

Bei einer Weiterbildung der Erfindung ist ein Signal des Senders in einen Signalteil zur Messung der Verformung des Rotorblatts und in einen Signalteil zur Messung der Positionsänderung des Senders und/oder Empfängers aufteilbar. Insbesondere ist vorgesehen, einen Lichtsignal mittels eines Strahlteilers aufzuteilen.

Bei einer Ausführungsform kann der Strahlteiler beabstandet vom Sender am Rotorblatt angebracht sein.

Diese Ausführungsform der Erfindung eignet sich insbesondere dazu, eine an sich bekannte Kombination aus Flächensensor und Lichtquelle zu verwenden. Wird nun der Strahlteiler vor dieser Sender/Empfängereinheit angebracht und des Signal durch einen Strahlteiler aufgeteilt, können auf dem Flächensensor über zwei Reflektoren, von denen der eine an einer Stelle in Richtung der Flügelspitze und der andere an der Seite des Rotorblatts angebracht ist, zwei Lichtpunkte auf dem Flächensensor erzeugt werden.

Dabei ist durch eine geeignete Geometrie insbesondere vorgesehen, dass diese Lichtpunkte voneinander beabstandet sind. So ist es möglich, mittels einer einzigen Sender/Empfängereinheit durch Auslesen der Position der beiden Lichtpunkte sowohl die Positionsänderung des Referenzpunktes zur Messung der Verformung des Rotorblatts als auch die Positionsänderung der Sender/Empfängereinheit zu messen.

Bei einer alternativen Ausführungsform der Erfindung ist der Strahlteiler in die Sender/Empfängereinheit integriert. Dies kann insbesondere vor der Empfangsoptik des Flächensensors, welcher insbesondere eine Fokusierlinse umfasst, erfolgen. Auch eine Ausführungsform, bei welcher der Strahlteiler zwischen Optik und Flächensensor sitzt, ist denkbar.

Bei einer Ausführungsform der Erfindung ist die Einrichtung derart ausgebildet, dass eine Messung der Verdrehung des Senders und/oder Empfängers unabhängig von dessen lateraler Position vorgenommen wird.

Insbesondere wird der Lichtstrahl mittels eines Referenzkollimators auf einem Flächensensor abgebildet. So kann der Lichtstrahl mittels des Referenzkollimators ins Unendliche projiziert werden und mittels eines weiteren Kollimators, insbesondere einer Sammellinse, auf den Flächensensor abgebildet werden. Durch diese Anordnung ist sichergestellt, dass eine Positionsänderung des Lichtpunktes auf dem Flächensensor nur der Verdrehung des Empfängers entspricht und nicht durch eine möglicherweise gleichzeitige laterale Verschiebung verfälscht wird.

Die laterale Verschiebung kann gleichzeitig über einen weiteren Kanal gemessen werden, was in meisten Anwendungsfällen aber nicht nötig ist, da für eine hinreichend genaue Messung eine Kompensation des durch die Verdrehung verursachten Messfehlers möglich ist.

Auch kann, wie es bei einer weiteren Ausführungsform denkbar ist, anhand des Intensitätsprofils auf einem Flächensensor oder einem Hartmann-Shack Sensor, umfassend einen Flächensensor und ein Kollimatorarray, auf die laterale Verschiebung rückgeschlossen werden, ohne dass hierfür weitere Mittel wie ein weiterer Flächensensor erforderlich sind.

Der Referenzkollimator kann insbesondere eine LED-Lichtquelle umfassen oder durch einen vom Sender oder Empfänger beleuchteten Retroreflektor gebildet werden.

Die Bestimmung der Verdrehung des Senders und/oder Empfängers über den zweiten Reflektor erfolgt vorzugsweise ebenfalls optisch, insbesondere ebenfalls mittels einer Leuchtdiode und/oder mittels eines Flächensensors, wie beispielsweise eines CCD- oder CMOS-Empfängers.

Die Einrichtung zur Messung der Verformung des Rotorblatts kann besonders einfach ausgebildet werden, indem der Sensor einen zweiten Messkanal umfasst, der auf den weiteren Reflektor ausgerichtet ist. Es ist denkbar, als Sender eine weitere Lichtquelle zu verwenden oder die Lichtquelle derart auszubilden und anzuordnen, dass diese in zwei Richtungen abstrahlt.

Sender und/oder Empfänger sind bei einer Ausführungsform der Erfindung an einem zwischen Nabe und Rotorblatt liegenden Schott beziehungsweise einer Plattform angeordnet. In diesem Bereich lässt sich die Sender-/Empfängereinheit besonders einfach anbringen.

Der Sender ist vorzugsweise als Lichtquelle, insbesondere als Leuchtdiode bzw. eine Mehrzahl von Leuchtdioden ausgebildet. Diese ist energiesparend und das monochromatische Licht lässt sich besser vom Umgebungslicht unterscheiden, so dass die Gefahr, dass der Empfänger durch Umgebungslicht beeinträchtigt wird, reduziert wird.

Der Reflektor sowie der Referenzreflektor sind vorzugsweise als Array von Tripel-Spiegeln oder Tripel-Prismen, bzw. geeigneten Retroreflektoren ausgebildet.

Bei einer Weiterbildung der Erfindung weisen Sender und/oder Empfänger Mittel zur drahtlosen Übertragung von Messsignalen auf. So ist es nicht erforderlich, im Bereich der Nabe Kabeldurchführungen vorzusehen.

Bei einer Weiterbildung der Erfindung weist Sender und/oder Empfänger Mittel zur Stromerzeugung auf, um sich selbst mit Energie zu versorgen. Derartige, nach dem Prinzip des "Energy Harvesting" arbeitende Systeme sind bekannt.

Es handelt sich dabei beispielsweise um Piezo-elektrisch funktionierende Systeme, welche durch die Drehung des Rotors Energie gewinnen, um diese in Strom umwandeln zu können. Aber auch andere Einrichtungen zur Erzeugung von Energie, wie beispielsweise Photozellen, sind denkbar. Eine weitere Weiterbildung besteht darin, dass die Reflektoren nicht als Retroreflektoren ausgebildet sind, sondern selbst eine Lichtquelle und Mittel zur Stromerzeugung aufweisen. Dies erhöht die Robustheit gegenüber Verschmutzung, Beschlag und Vereisung. Ein solcher aktiver Reflektor kann entweder durch ein Signal, beispielsweise einem in Richtung des Reflektors gesendeten Lichtpulses, synchron zur Belichtung des Sensors getriggert werden, oder der Sensor synchronisiert die Belichtung des Detektors mit der Pulsfrequenz des aktiven Reflektors.

So braucht die Sender-/Empfängereinheit, oder auch der aktive Reflektor, nicht mit Batterien bestückt zu werden und es sind ferner keine Kabeldurchführungen zur Stromversorgung erforderlich.

Die Erfindung betrifft des Weiteren ein Verfahren zur Messung der Verformung eines Rotorblatts, insbesondere mittels einer vorstehend beschriebenen Einrichtung.

Mittels eines Senders wird ein Signal, insbesondere ein Lichtstrahl über einen Reflektor oder direkt auf einen beabstandeten Empfänger gesendet. Anhand einer Positionsänderung des empfangenen Signals wird die Verformung des Rotorblatts, insbesondere die Verbiegung des Rotorblatts, bestimmt.

Die Bestimmung erfolgt insbesondere optisch mittels eines Flächensensors.

Gemäß der Erfindung wird eine durch eine Verformung des Rotorblatts verursachte Positionsänderung des Senders und/oder Empfängers gemessen und diese Positionsänderung bei der Berechnung der Verformung des Rotorblatts berücksichtigt.

Die Positionsänderung wird dabei über ein quer, insbesondere senkrecht, zu einer Haupterstreckungsrichtung des Rotorblattes laufendes Signal gemessen.

Hierzu kann an der Seite des Rotorblatts als Referenzpunkt beispielsweise ein Sender oder ein Reflektor vorgesehen sein.

Die Positionsänderung wird vorzugsweise anhand eines weiteren Reflektors, eines Referenzreflektors, bestimmt, welcher an einer Seite des Rotorblatts angeordnet ist.

### Beschreibung der Zeichnungen

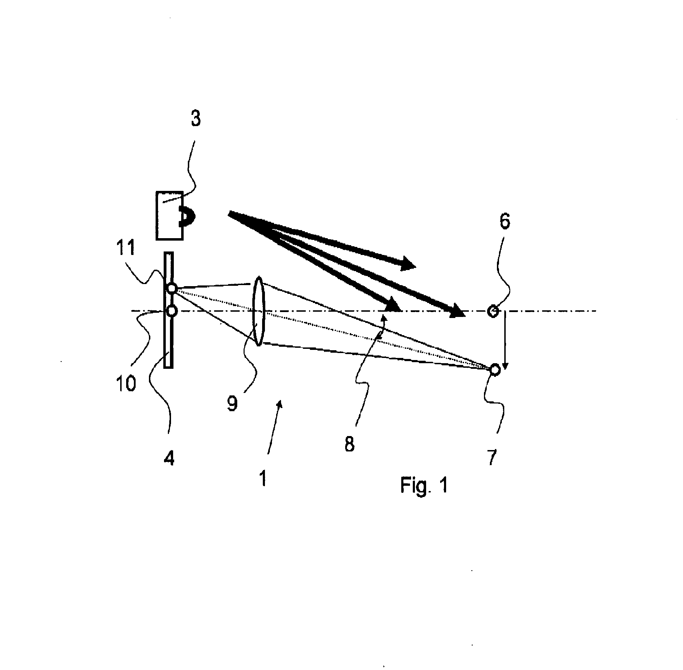

Die Erfindung soll im Folgenden anhand eines schematisch dargestellten Ausführungsbeispiels Bezug nehmend auf die Zeichnungen Fig. 1 bis Fig. 7 näher erläutert werden.

Bezug nehmend auf Fig. 1 soll schematische ein Messprinzip zur Bestimmung der Vorformung eines Rotorblatts erläutert werden.

Schematisch dargestellt ist eine Einrichtung zur Messung der Verformung eines Rotorblatts 1.

Die Einrichtung zur Messung der Verformung eines Rotorblatts 1 umfasst einen Sender 3, hier in Form einer Leuchtdiode, sowie einen Empfänger 4, hier in Form eines CCD- oder CMOS- Empfängers.

Über den Sender 3 wird Licht abgestrahlt, welches von einem (oder mehreren) am Rotorblatt angeordneten Retroreflektor reflektiert wird.

Hier dargestellt ist im unbelasteten Zustand eine Reflektorposition 1, welche mit Bezugszeichen 6 bezeichnet ist. In dieser Position liegt der Retroreflektor genau mittig gegenüber dem Empfänger 4. Die Position des Lichtpunktes im unbelasteten Zustand ist mit Bezugszeichen 10 gekennzeichnet.

Im belasteten Zustand, für den der Strahlengang eingezeichnet ist, verschiebt sich die Position des Retroreflektor auf die mit Bezugszeichen 7 bezeichnete Position. In der Folge wandert der über eine Linse 9 auf den Empfänger projizierte Lichtpunkt auf die mit Bezugszeichen 11 bezeichnete Position. Der Reflektionswinkel 8 kann so bestimmt werden und anhand dieses Winkels und des bekannten Abstands zum Retroreflektor direkt die Verformung des Rotorblatts an der Stelle des Retroreflektors oder der Retroreflektoren berechnet werden.

Bei einer alternativen Ausführungsform der Erfindung (nicht dargestellt) sitzt der Sender an der Stelle des Reflektors. Es ist ersichtlich, dass sich so das in Fig. 1 dargestellte Grundprinzip nicht ändert.

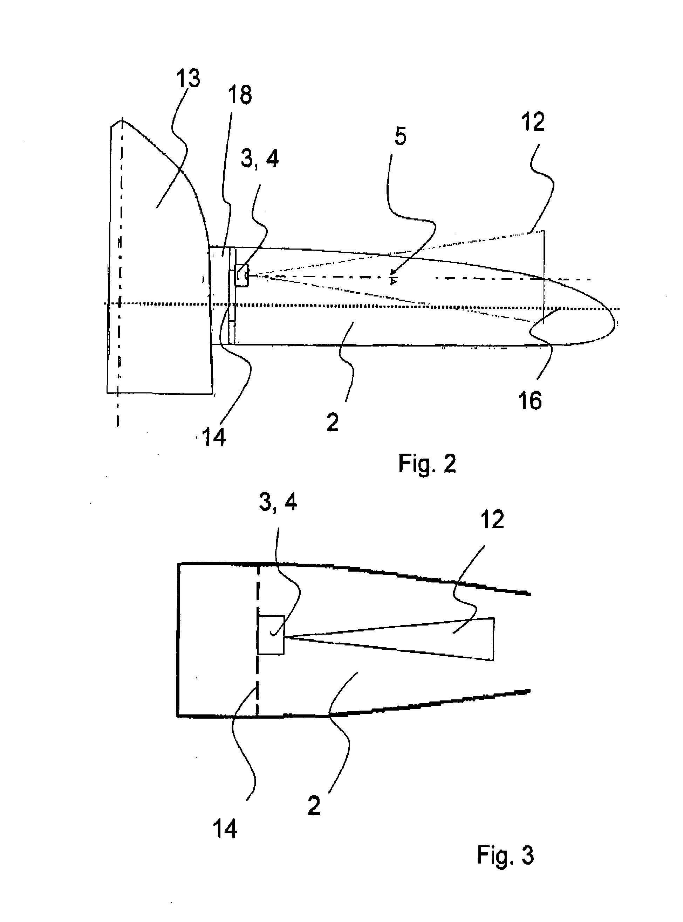

In Fig. 2 ist schematisch ein Rotorblatt 2 dargestellt, welches mit einer Sender-/Empfängereinheit 3, 4 versehen ist. Die Haupterstreckungsrichtung 16 des Rotorblatts verläuft von der Nabe 13 zur Flügelspitze.

Das Rotorblatt 2 ist mittels eines Flansches 18 in der Nabe 13 eines Windrads befestigt. Die Sender-/Empfängereinheit 3, 4 ist beispielsweise an einem Schott (Plattform) 14 angebracht, welches an den Flansch 18 angrenzt. Es ist jedoch jede andere Position möglich. Voraussetzung ist ein freies Sichtfeld zu den Retroreflektoren. Insbesondere wäre auch eine Montage direkt in der Nabe bzw. dem Flansch denkbar.

Von der Sender-/Empfängereinheit 3, 4 beabstandet befindet sich ein Retroreflektor 5, hier schematisch in Form eines Tripel-Spiegels, der dem vom Sender 3 abgestrahlten Lichtpunkt auf die Sender-/Empfängereinheit 3, 4 zurück reflektiert. Der hier schematisch eingezeichnete Messbereich ist so groß, dass der Reflektor 5 nicht aus dem Messbereich wandern kann.

Fig. 3 zeigt, schematisch dargestellt, das Prinzip der an dem Schott (Plattform) 14 angebrachten Sender-/Empfängereinheit 3, 4, welche einen Lichtkegel, der den Messbereich 12 definiert, auf das Rotorblatt 2 abstrahlt.

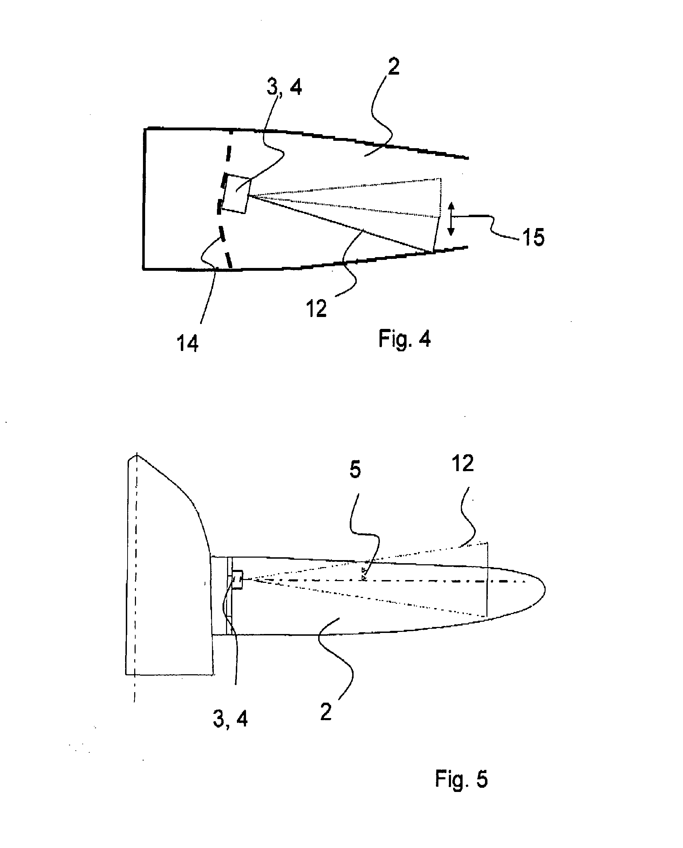

Fig. 4 zeigt, ausgehend von Fig. 3, als Prinzipskizze die Verformung des Schotts (Plattform) 14 bei Belastung, welche zu einer Verdrehung, also zu einer Winkelabweichung der Sender-/Empfängereinheit 3, 4 gegenüber der Position im unbelasteten Zustand führt. Zu sehen ist, dass der Messbereich 12 nicht mehr genau auf der Achse des Rotorblatts 2 liegt, sondern gewandert ist. Die Richtungsänderung ist mit dem Pfeil 15 dargestellt. Es versteht sich, dass die hier dargestellten Verformungen stark übertrieben dargestellt sind und es sich außerdem hierbei um ein dreidimensionales Problem handelt, d.h. die Verformung kann über einen Flächensensor nicht nur in einer Richtung bestimmt werden.

Fig. 5 zeigt analog zur Fig. 2, das Rotorblatt 2 im belasteten Zustand. Aufgrund der Verdrehung der Sender-/Empfängereinheit 3, 4 ist der Messbereich 12 in dieser Ansicht leicht nach unten gewandert. Der Reflektor 5 befindet sich immer noch im Messbereich 12, allerdings kommt es durch die Verdrehung der Sender-/Empfängereinheit 3, 4 und dem damit verbundenen Winkelfehler zu einem Messfehler.

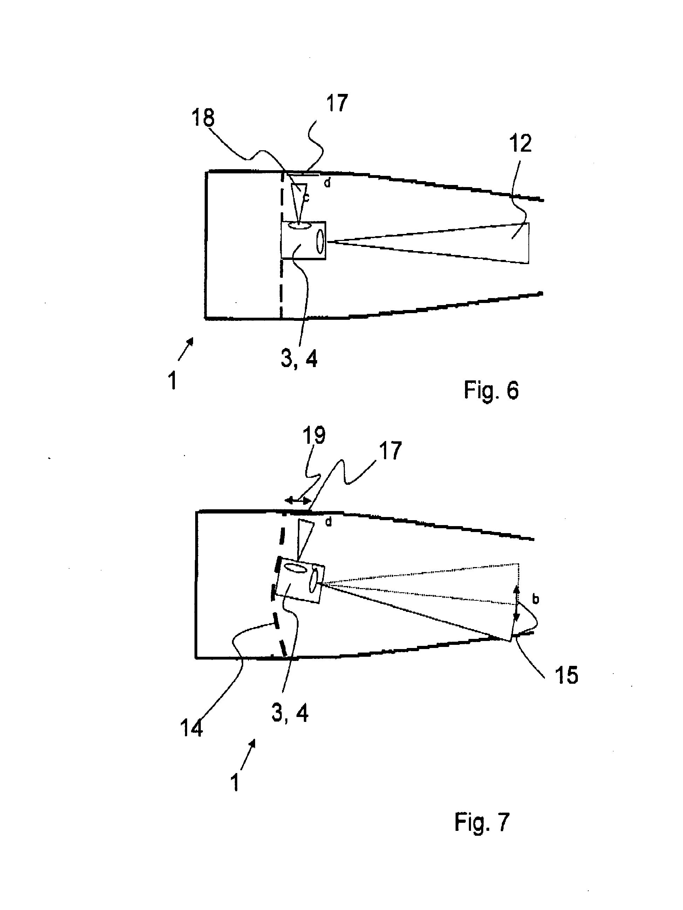

Fig. 6 zeigt, schematisch dargestellt, eine erste Ausführungsform der Erfindung, bei der die Einrichtung zur Messung der Verformung eines Rotorblatts bei Belastung 1 eine Sender/Empfängereinheit 3, 4 erfasst.

In der Sender/Empfängereinheit 3, 4 ist ein zweiter Messkanal integriert, welcher den Messbereich 18 definiert.

Es handelt sich dabei beispielsweise um eine Kombination aus Flächensensor und Leuchtdiode, welche zur Seite des Rotorblatts hin, also quer zur Haupterstreckungsrichtung des Rotorblatts ausgerichtet ist.

Die Referenzmarke 17 kann, wie es in diesem Ausführungsbeispiel dargestellt ist, beispielsweise durch einen Reflektor gebildet werden.

Mithin ist es mittels der Sender/Empfängerkombination möglich, wie in Fig. 7 näher dargestellt ist, sowohl eine Verdrehung der Sender/Empfängerkombination 3, 4 als auch eine Verformung des Rotorblatts zu messen.

Zu erkennen ist in Fig. 7, dass bei einer Verformung der Plattform bzw. des Schotts 14 sich die Sender/Empfängereinheit 3, 4 verdreht. Es versteht sich, dass die hier dargestellte Verdrehung stark übertrieben dargestellt wird und nur in einer Ebene dargestellt ist.

Aufgrund der Verdrehung wandert die Referenzmarke 17 auf dem Flächensensor, die Verschiebung wird durch den Pfeil 19 dargestellt.

Auch das Messprinzip zur Messung der Verformung beruht auf einer Winkelmessung. Die Winkelverschiebung der Referenzmarke in Richtung Flügelspitze des Rotorblatts wird durch den Pfeil 15 symbolisiert.

Aufgrund der gleichzeitigen Messung der Verdrehung der Sender/Empfängereinheit 3, 4 kann diese bei der Berechnung der Verformung berücksichtigt werden und so eine höhere Messgenauigkeit erzielt werden.

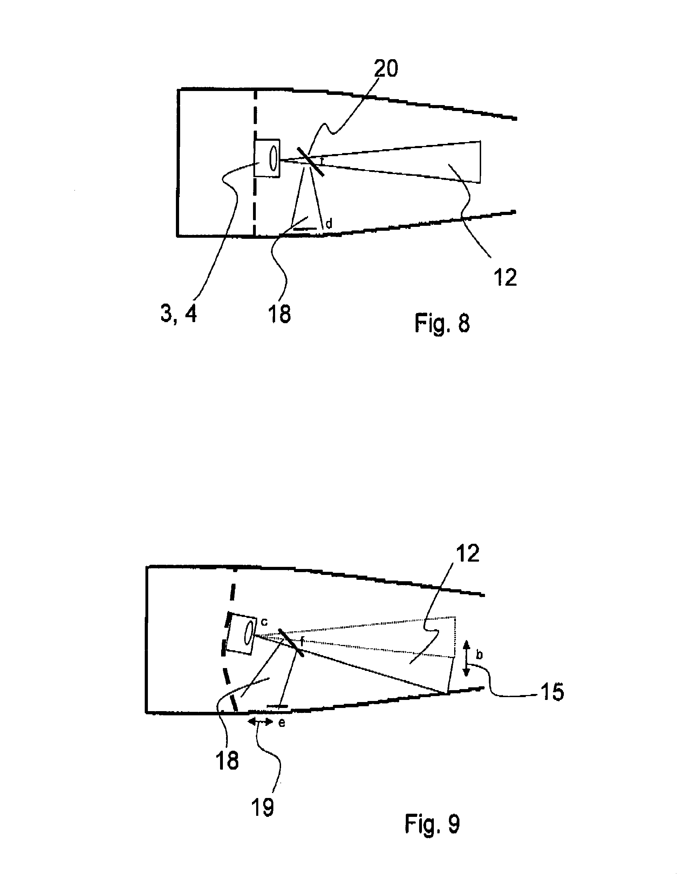

Bezugnehmend auf Fig. 8 und 9 soll eine weitere Ausführungsform der Erfindung erläutert werden.

Fig. 8 zeigt, schematisch dargestellt, ebenfalls eine Sender/Empfängereinheit 3, 4, welche einen Flächensensor mit einer entsprechenden Optik umfasst.

Weiter umfasst auch diese Sender/Empfängereinheit eine Leuchtdiode, deren Lichtpunkt zurück auf den Flächensensor reflektiert wird.

Zur Aufteilung des so erzeugten Signals ist vor der sender/Ernpfängereinheit 3, 4 ein Strahlteiler 20 vorgesehen, mittels dessen das Signal in einen ersten Signalteil in Richtung Flügelspitze, welcher den Messbereich 12 erzeugt, und in einen zweiten Teil, in Richtung der Seite des Rotorblatts, welcher den Messbereich 18 erzeugt, aufgeteilt wird.

Diese Ausführungsform der Erfindung hat den Vorteil, dass eine einzige Kombination aus Sender und Empfänger ausreicht, da nunmehr sowohl der Lichtpunkt, welcher von der Flügelspitze kommt, als auch der Lichtpunkt, welcher von der Seite kommt, auf den Flächensensor reflektiert werden.

Vorzugsweise wird die Geometrie derart ausgelegt, dass die beiden Punkte sich auf einer anderen Position des Flächensensors befinden.

Wie in Fig. 9 zu erkennen, kann so über die Winkelverschiebung 19 die Verdrehung der Sender/Empfängereinheit und über die Winkelverschiebung 15 die Verformung des Rotorblatts gemessen werden, wobei die Messung der Verdrehung erfolgt, um einen möglichen Messfehler bei der Messung der Verformung des Rotorblatts zu kompensieren.

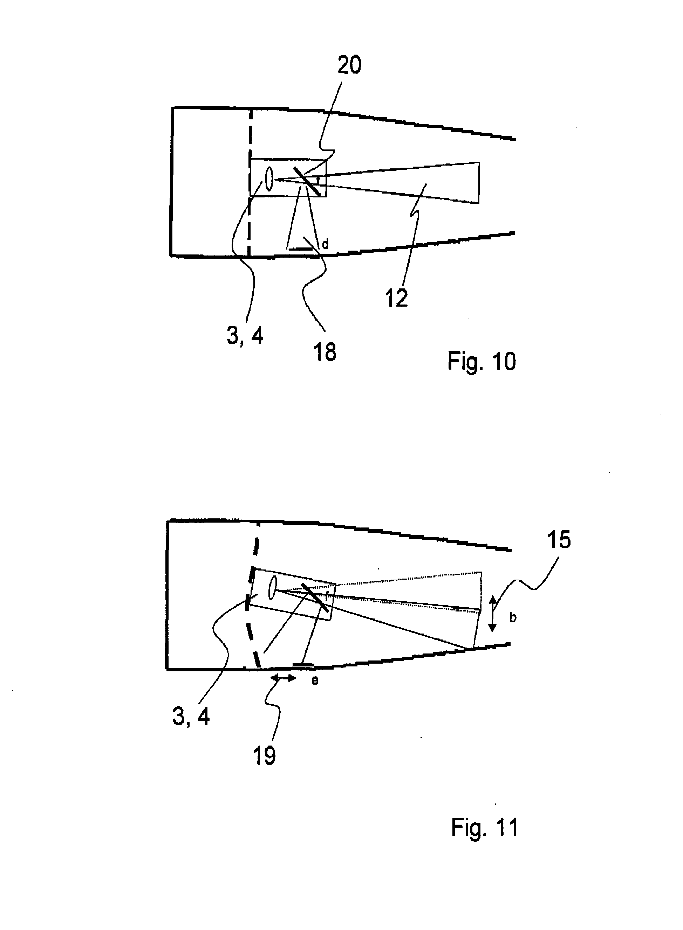

Bezugnehmend auf Fig. 10 und Fig. 11 soll eine weitere Ausführungsform der Erfindung erläutert werden, bei welcher ein Strahlteiler 20 im Gehäuse der Sender/Empfängereinheit 3, 4 angeordnet ist.

Das Messprinzip entspricht ansonsten der in Fig. 8 und Fig. 9 dargestellte Ausführungsformen, d.h. auch hier sind die Messbereiche 12 und 18 vorhanden.

Die Integration des Strahlteilers 20 im Gehäuse der Sender/Empfängereinheit 3, 4 hat den Vorteil, dass bis auf die Reflektoren (nicht dargestellt) sämtliche zur Messung erforderlichen Bauteile in einem Gehäuse angeordnet sind und so auch insbesondere nicht die Gefahr besteht, dass es zu Positionsänderungen des Strahlteilers 20 relativ zur Optik der Sender/Empfängereinheit kommt.

Wie in Fig. 11 zu erkennen, kann über die Winkelverschiebung 15 und 19 eine Messung entsprechend Fig. 8 und Fig. 9 vorgenommen werden.

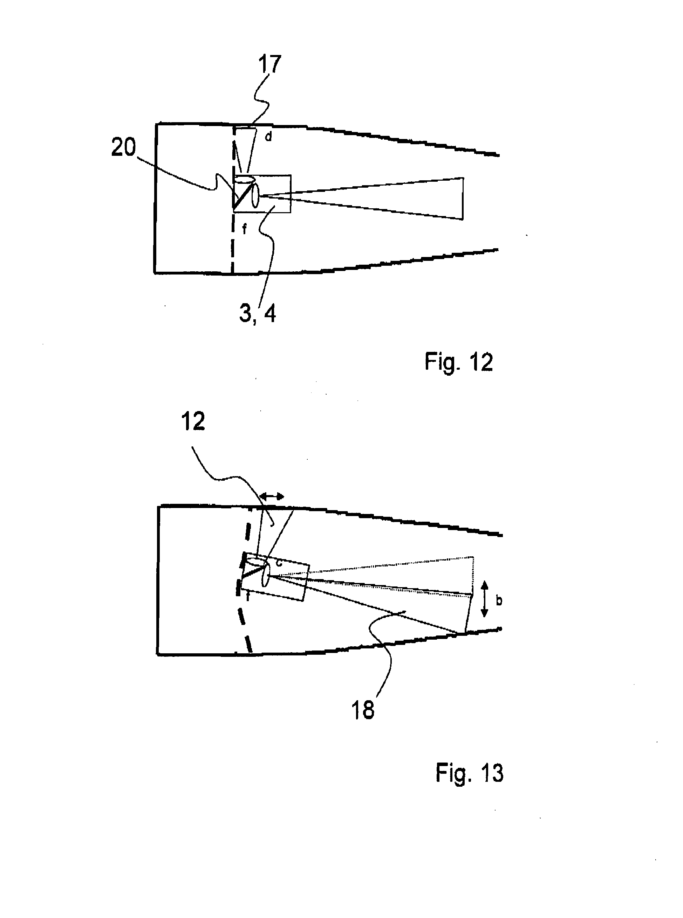

Bezug nehmend auf Fig. 12 und Fig. 13 soll ein weiteres Ausführungsbeispiel der Erfindung erläutert werden.

Wie in Fig. 12 schematisch dargestellt, ist im Sensor zwischen Flächensensor und Empfangsoptik ein Strahlteiler 20 vorgesehen, über den ein zweiter Messkanal erzeugt wird, der auf eine an der Nabe befestigte Referenzmarke 17 ausgerichtet ist und so auf eine Seitenwand des Rotorblatts in geringerem Abstand zielt. Dieser zweite Messkanal hat in diesem Ausführungsbeispiel eine eigene Optik und überlagert den ersten Messkanal, d.h. den Messkanal, welcher in Richtung Flügelspitze zeigt. Durch eine geeignete Anordnung der Bauteile kann auch bei dieser Ausführungsvariante sichergestellt werden, dass die Referenzmessung die Hauptmessung nicht beeinträchtigt.

Wie in Fig. 13 dargestellt, können Ausrichtungsfehler der Plattform bzw. des Schotts gemessen werden.

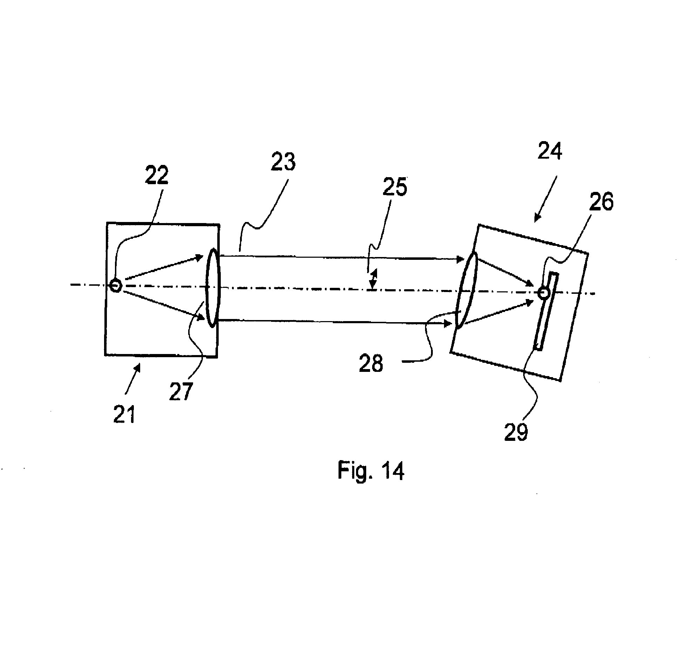

Fig. 14 zeigt schematisch eine alternative Ausführungsform der Referenzmarke.

Bei dieser Ausführungsform wird mit dem Referenzkollimator 21, umfassend eine Kollimatorlichtquelle 22 und eine Linse 27, ein Strahl 23 ins Unendliche abgebildet wird.

Der Verdrehwinkel 25 wird dadurch bestimmt, indem in der Vorrichtung zur Messung der Verdrehung von Sender/Empfänger 24 die Spotlage 26 auf dem Empfänger 29 des Referenzpfades vermessen wird. Hierzu wird der Strahl 23 mittels der Linse 28 auf dem Empfänger abgebildet. Die Spotlage ist proportional zum Verdrehwinkel 25.

Diese Ausführungsform der Erfindung hat den Vorteil, dass seitliche Verschiebungen des Senders und/oder Empfängers die Spotlage nicht beeinträchtigen. In der Regel genügt für eine hinreichend genaue Messung die Bestimmung der Verdrehung des Empfängers.

Es versteht sich, dass es statt einer gegenüberliegenden Anordnung von Sender und Empfänger auch bei dieser Ausführungsform der Erfindung denkbar ist, dass Lichtbünde¹ gerichtet, beispielsweise beim Tripelspiegel, Tripelprisma oder einem Array von Tripelprismen bzw. Tripelspiegeln, zurückzureflektieren und so Empfänger und Sender als eine Baueinheit auszugestalten (nicht dargestellt).

Bei Verwendung eines Hartmann-Shack Sensorarrays und unter Auswertung des Intensitätsprofils auf dem Flächensensor kann aber auch die laterale Verschiebung bestimmt werden, falls dies erforderlich scheint.

Die Erfindung ermöglicht auf sehr einfache Weise eine Verbesserung der Genauigkeit eines Systems zur Berechnung der Verformung eines Rotorblatts.

### Bezugszeichenliste:

- 1: Einrichtung zur Messung der Verformung eines Rotorblatts
- 2: Rotorblatt
- 3: Sender
- 4: Empfänger des Messkanals
- 5: Retroreflektor (=Messmarke)
- 6: Reflektorposition 1
- 7: Reflektorposition 2
- 8: Reflektionswinkel
- 9: Linse des Messkanals
- 10: Spotposition auf Empfänger 1
- 11: Spotposition auf Empfänger 2
- 12: Messbereich
- 13: Nabe
- 14: Schott (bzw. Plattform)
- 15: Pfeil (= Winkelverdrehung)
- 16: Haupterstreckungsrichtung
- 17: Referenzmarke
- 18: zweiter Messbereich
- 19: Pfeil
- 20: Strahlteiler
- 21: Referenzkollimator
- 22: Kollimatorlichtquelle / Referenzmarke
- 23: Abbildung ins Unendliche / kollimierter Strahl
- 24: Vorrichtung zur Messung der Verdrehung von Sender/Empfängerkanal
- 25: Vedrehwinkel
- 26: Spotlage auf dem Empfänger des kollimierten Strahls
- 27: Linse Referenzkollimator
- 28: Linse Referenzpfad
- 29: Empfänger Referenzpfad

## Patentansprüche

1. Einrichtung zur Messung der Verformung eines Rotorblatts bei Belastung, insbesondere des Rotorblatts einer Windkraftanlage, umfassend zumindest einen am Rotorblatt angeordneten Empfänger und zumindest einen Sender ,
**dadurch gekennzeichnet, dass** die Einrichtung Mittel zur Messung einer Positionsänderung, insbesondere einer Verdrehung, des Senders und/oder Empfängers zu einer Rotorblatt-Bezugsachse aufweist, wobei die Einrichtung derart ausgebildet ist, dass die Messung quer, insbesondere senkrecht zur Haupterstreckungsrichtung des Rotorblatts erfolgt.

2. Einrichtung zur Messung der Verformung eines Rotorblatts bei Belastung, **dadurch gekennzeichnet,**
**dass** die Messung in Bezug auf einen Referenzpunkt auf einer an einer Nabe des Rotorblatts befestigten Seitenwand erfolgt.

3. Einrichtung zur Messung der Verformung eines Rotorblatts nach einem der vorstehenden Ansprüche, **dadurch gekennzeichnet, dass** mittels des Empfängers eine Verschiebung eines Messpunktes auf einem Flächensensor messbar ist.

4. Einrichtung zur Messung der Verformung eines Rotorblatts nach einem der vorstehenden Ansprüche, **dadurch gekennzeichnet, dass** der Messpunkt über eine Empfangsoptik auf den Flächensensor abgebildet wird.

5. Einrichtung zur Messung der Verformung eines Rotorblatts nach einem der vorstehenden Ansprüche, **dadurch gekennzeichnet, dass** der Messpunkt ein aktiver Sender oder ein passiver Reflektor ist.

6. Einrichtung zur Messung der Verformung eines Rotorblatts nach einem der vorstehenden Ansprüche, **dadurch gekennzeichnet, dass** das Signal des Senders und/oder Empfängers in einen Signalteil zur Messung der Verformung des Rotorblatts und einen Signalteil zur Messung der Positionsänderung des Senders und/oder Empfängers aufteilbar ist, insbesondere mittels eines Strahlteilers.

7. Einrichtung zur Messung der Verformung eines Rotorblatts nach einem der vorstehenden Ansprüche, **dadurch gekennzeichnet, dass** eine Referenzmarke einen Kollimator umfasst, mittels dessen ein paralleles Strahlenbündel aussendbar ist, und wobei der Empfänger einen weiteren Kollimator oder ein Kollimatorarray umfasst, um das Strahlenbündel auf einen Flächensensor zu fokussieren.

8. Einrichtung zur Messung der Verformung eines Rotorblatts nach einem der vorstehenden Ansprüche, **dadurch gekennzeichnet, dass** die Mittel zur Messung einer Verdrehung einen weiteren Sender und/oder Reflektor umfassen, welcher gegenüber dem Empfänger in geringerem Abstand als der Sender und/oder Reflektor angebracht ist.

9. Einrichtung zur Messung der Verformung eines Rotorblatts nach einem der beiden vorstehenden Ansprüche, **dadurch gekennzeichnet, dass** der Empfänger einen zweiten Messkanal umfasst, der auf den weiteren Sender und/oder Reflektor ausgerichtet ist.

10. Einrichtung zur Messung der Verformung eines
Rotorblatts nach einem der vorstehenden Ansprüche, **dadurch gekennzeichnet, dass** der Sender als Lichtquelle, insbesondere als Laserdiode oder Leuchtdiode ausgebildet ist.

11. Einrichtung zur Messung der Verformung eines
Rotorblatts nach einem der vorstehenden Ansprüche, **dadurch gekennzeichnet, dass** die Einrichtung einen Reflektor umfasst, welcher als Tripelspiegel oder Tripelprisma, Array von Tripelspiegel, Array von Tripelprismen, oder einem anderen geeigneten Retroreflektor ausgebildet ist und/oder dass der Empfänger als optischer Flächensensor, insbesondere als CCD- oder CMOS-Sensor ausgebildet ist.

12. Einrichtung zur Messung der Verformung eines
Rotorblatts nach einem der vorstehenden Ansprüche, **dadurch gekennzeichnet, dass** Sender und/oder Empfänger Mittel zur drahtlosen Übertragung von Messsignalen aufweisen.

13. Einrichtung zur Messung der Verformung eines
Rotorblatts nach einem der vorstehenden Ansprüche,
**dadurch gekennzeichnet, dass** Sender und/oder Empfänger Mittel zur Stromerzeugung aufweisen, um mit Energie versorgt zu werden.

14. Einrichtung zur Messung der Verformung eines
Rotorblatts nach einem der vorstehenden Ansprüche, **dadurch gekennzeichnet, dass** zumindest ein Sender Mittel zur Stromerzeugung aufweist, um mit Energie versorgt zu werden.

15. Verfahren zur Messung der Verformung eines
Rotorblatts, insbesondere mittels einer Einrichtung zur Messung der Verformung nach einem der vorstehenden Ansprüche, umfassend die Schritte:
- Senden eines Signals auf einen Empfänger,
- Bestimmen einer Verformung, insbesondere Bestimmen einer Verbiegung des Rotorblatts anhand einer Positionsänderung des empfangenen Signals,
**dadurch gekennzeichnet, dass** über ein quer, insbesondere senkrecht, zu einer Haupterstreckungsrichtung des Rotorblatts laufendes Signal eine durch eine Verformung des Rotorblatts verursachte Positionsänderung, insbesondere Verdrehung, eines Senders zum Senden des Signals und/oder eines Empfängers zum Empfangen des Signals gemessen wird und diese Verdrehung bei der Berechnung der Verformung des Rotorblatts berücksichtigt wird.
